# EUROPÄISCHE PATENTSCHRIFT

(11) **EP 0 527 296 B1**
(45) Veröffentlichungstag und Bekanntmachung des Hinweises auf die Patenterteilung: **14.06.1995**
(21) Anmeldenummer: 92107684.0
(22) Anmeldetag: 07.05.1992
(51) Int. Cl.: F16B 13/14, E04B 1/41

(54) **Ankerstange zur Verankerung mittels Kunstharz**
Anchoring bolt to be anchored by a sinthetic resin
Boulon d'ancrage pour l'ancrage au moyen d'une résine synthétique

(30) Priorität: 29.06.1991 DE 4121620
(43) Veröffentlichungstag der Anmeldung: 17.02.1993
(73) Patentinhaber: fischerwerke Artur Fischer GmbH & Co. KG, D-72178 Waldachtal (DE)
(72) Erfinder: Weber, Wilfried, Dipl.-Ing. (FH), W-7294 Schopfloch-Unteriflingen (DE); Mallèe, Rainer, Dr. Dr.-Ing., W-7244 Waldachttal 3/Tumlingen (DE); Hein, Bernd, Dipl.-Ing. (FH), W-7292 Schönmünzach (DE); Mayer, Burkhard, Dr.-Ing., W-7033 Herrenberg-Gülstein (DE); Güth, Harald, Dr.-Ing. (FH), W-7244 Waldtachtal 2 (DE); Haage, Manfred, Dipl.-Ing. (FH), W-7295 Dornstatten-Aach (DE)

(56) Entgegenhaltungen:
- EP-A- 0 352 226
- WO-A-88/07142
- DE-A- 3 516 866
- DE-A- 3 741 345
- US-A- 5 073 065

## Beschreibung

Die Erfindung betrifft eine Ankerstange mit einem Gewinde zum Befestigen eines Gegenstandes und einem mittels einer aushärtenden Kunstharzmasse in einem Bohrloch eines Bauteils verankerbaren Verankerungsbereich gemäß der Gattung des Anspruches 1.

Zur Verankerung einer Ankerstange mittels einer Verbundmasse wird zunächst im Ankergrund ein Bohrloch erstellt, dessen Durchmesser etwas größer ist als der Außendurchmesser der Ankerstange. Danach wird in das Bohrloch eine Glasampulle eingeschoben, die die aus einem Harz, dem Härter und Zuschlagstoffen bestehende Verbundmasse enthält. Mit der in einer Bohrmaschine eingespannten Ankerstange wird die Ampulle im Bohrloch zerstört und die Komponenten der Verbundmasse durch Vermengen aktiviert. Nach dem Aushärten der Verbundmasse ist die Ankerstange fest im Bohrloch eingebunden und verankert. Die Verankerung beruht im wesentlichen auf dem Klebeverbund zwischen Verbundmasse und Bohrlochwandung. Dieser Verbund wird jedoch dann erheblich gemindert, wenn durch die Verankerungsstelle ein Riß verläuft. Durch die Vergrößerung des Bohrloches in Folge des Risses löst sich die Verbundmasse an der Bohrlochwandung ab, so daß nur geringe Haltekräfte vorliegen.

In der DE-OS 35 16 866 wurde daher eine Ankerstange vorgeschlagen, die an ihrem vorderen Ende mit einem Kopfteil versehen ist, das bei der Verankerung der Ankerstange im Bereich einer Hinterschneidung des Bohrloches positioniert wird. Damit wird im Bereich der Hinterschneidung ein Formschluß erzielt, der auch bei Rißbildung die Aufnahme von Zugkräften zuläßt. Allerdings beruht die Haltekraft weitgehendst auf dem Formschluß im Hinterschnitt, so daß ein nicht unerheblicher Leistungsabfall im gerissenen Beton eintritt. Ferner erfordert dieses bekannte Verankerungsverfahren ein Bohrloch mit Hinterschneidung, zu dessen Herstellung spezielle Bohrwerkzeuge erforderlich sind.

In der EP-A-0 352 226 wird eine Verankerung in einem zylindrischen Bohrloch mit einer Ankerstange vorgeschlagen, deren Verankerungsbereich durch ein am Einführende der Ankerstange angeordnetes Kopfteil und einen konischen, sich zum Kopfteil hin verjüngenden Abschnitt gebildet ist. Auf dem gesamten Verankerungsbereich und einem Teil des Schaftes der Ankerstange ist ein Trennmittel aufgebracht, das eine Verklebung der Verbundmasse mit der Ankerstange verhindern soll. Bei der Entstehung eines Risses löst sich der Mörtelverbund von der Ankerstange ab, so daß der Verbund zwischen der Mörtelmasse und der Bohrlochwandung erhalten bleibt. Durch Nachrutschen des mit dem Spreizkonus versehenen Kopfteiles der Ankerstange soll die Erweiterung der Innenbohrung der ausgehärteten Mörtelplombe wieder ausgeglichen werden. Durch den in Richtung Bohrlochgrund sich erweiternden Spreizkonus werden jedoch bei Belastung der Ankerstange Spreizkräfte erzeugt, was gerade bei Verankerungen mit Verbundankern vermieden werden soll. Ferner besteht die Gefahr, daß die Trennschicht beim Eintreiben des Verbundankers abgerieben bzw. beschädigt wird, so daß der erwünschte Effekt des Nachrutschens nicht eintritt. Durch das Nachrutschen ergibt sich ferner eine axiale Verschiebung der Ankerstange, die zu einem die Verspannung des zu befestigenden Gegenstandes an der Außenfläche des Bauteils aufhebenden Schlupf führt.

Aus der WO-A-8807 142 ist eine Ankerstange bekannt, deren Verankerungsbereich durch mehrere nacheinander angeordnete und beschichtete Spreizkonen gebildet ist. Damit wird auch bei dieser bekannten Ankerstange durch Nachrutschen der Spreizkonen bei einer durch Rißbildung entstehenden Bohrlocherweiterung eine erneute Verkeilung der Ankerstange, allerdings mit den zuvor beschriebenen nachteiligen Folgen, erreicht. Zusätzlich weist diese Ankerstange ein Kopfteil mit einer annähernd rechtwinkligen bzw. abgeschrägten Schulterfläche auf. Da dieses Kopfteil das für die erneute Verkeilung der Ankerstange erforderliche Nachrutschen der Spreizkonen verhindern wurde, ist auf der Schulterfläche des Kopfteiles eine elastische Scheibe angeordnet. Somit tritt auch bei dieser Ankerstange nach einer Bohrlocherweiterung eine axiale Verschiebung auf, die zu Spreizdruckkräften einerseits und einem die Verspannung des zu befestigenden Gegenstandes aufhebenden Schlupf führt.

Der Erfindung liegt die Aufgabe zugrunde, eine spreizdruckfreie Verankerung mittels Kunstharz und einer Ankerstange zu schaffen, die auch in gerissenem Beton hohe Haltewerte bei Vermeidung eines Schlupfes aufweist.

Die Lösung dieser Aufgabe wird mit den im Anspruch 1 angegebenen Merkmalen erreicht. Zum Setzen der erfindungsgemäßen Ankerstange wird diese mit einem Bohrhammer in ein zylindrisches Bohrloch eingeführt, in der sich eine Harzpatrone befindet. Nach dem Aushärten des Hartes wird auf die Ankerstange das Montagedrehmoment aufgebracht. Dabei wird die auf der Schulterfläche des Kopfteiles angeordnete elastische Scheibe etwas komprimiert, so daß durch die dabei entstehende geringfügige axiale Verschiebung der Ankerstange in Richtung Bohrlochmündung der konische Abschnitt der Ankerstange aus dem auf dem Abschnitt abgeformten Konus der Mörtelplombe abgelöst wird. Damit besteht zwischen diesem Abschnitt und der Verbundmasse keine Verbindung mehr, so daß beim Entstehen eines Risses der Klebeverbund zwischen der Mörtelplombe und der Bohrlochwandung erhalten bleibt. Da das Kopfteil formschlüssig in der Mörtelplombe eingebunden ist, bleibt die volle Haltekraft der Verankerung auch in gerissenem Beton erhalten. Das Kopfteil der Ankerstange erzeugt weder eine Spreizkraft noch ist ein Nachrutschen der Ankerstange zur erneuten Verkeilung erforderlich. Dadurch wird eine axiale Verschiebung der Ankerstange vermieden, die zu einem die Verspannung des zu befestigenden Gegenstandes reduzierenden Schlupf führen würde.

Die vorzugsweise aus Kunststoff bestehende Scheibe kann entweder aufgeklebt oder aufgespritzt werden. Bei einer Ausbildung der Scheibe als offener Ring ist es möglich, die Scheibe über den konischen Abschnitt aufzuclipsen.

Um sicherzustellen, daß bei Entstehung eines Risses keine Ablösung der Mörtelplombe an der Bohrlochwandung eintritt und der Riß quer bis zur Ankerstange verläuft, ist es zweckmäßig, die Scheibe mit mehreren am konischen Abschnitt anliegenden und achsparallel verlaufenden Stegen auszustatten. Mit den Stegen werden Trennebenen im Mörtelverbund erzeugt, die den Rißverlauf beeinflußen.

Eine an der Stirnseite des Kopfteiles angeordnete Keilspitze erleichtert die Zerstörung der das Harz enthaltenden Glasampulle. Ferner dient die Keilspitze mit ihren Flächen als Drehsicherung der Ankerstange beim Aufbringen des Montagedrehmomentes.

In der Zeichnung sind Ausführungsbeispiele der Erfindung dargestellt.

Es zeigen:
- Figur 1: die im Bohrloch eines Bauteils verankerte Ankerstange,
- Figur 2: den vorderen Bereich der Ankerstange vor und nach Aufbringen des Montagedrehmomentes,
- Figur 3: eine weitere Ausführungsform der Ankerstange und Scheibe.

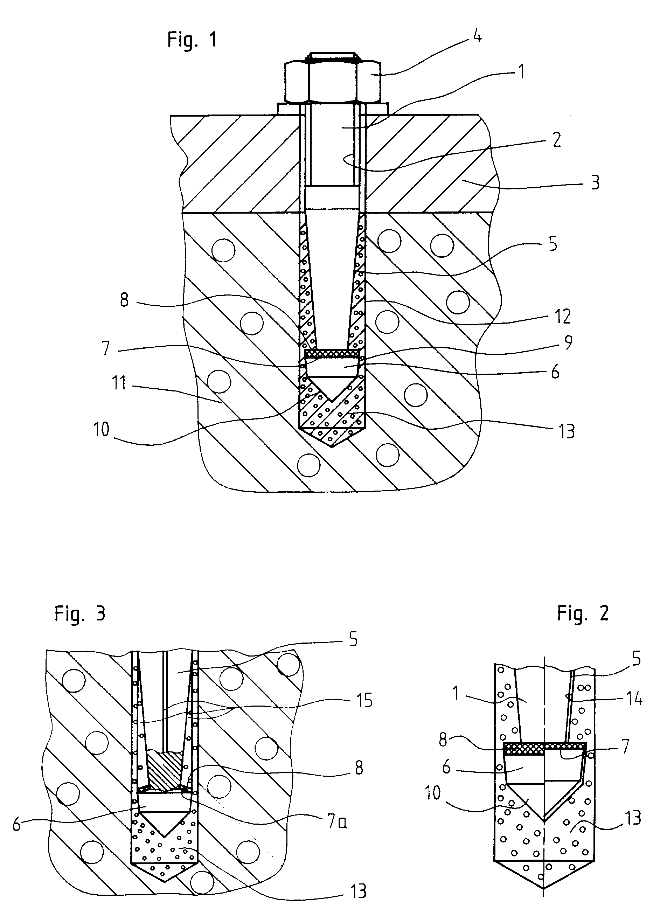

Die in Figur 1 dargestellte Ankerstange 1 weist ein Außengewinde 2 auf, auf das zur Befestigung eines Gegenstandes 3 eine Mutter 4 aufschraubbar ist. An das Gewinde 2 schließt sich ein konischer Abschnitt 5 an, der sich in Richtung Kopfteil 6 verjüngt. Dadurch entsteht eine Schulterfläche 7, auf der eine elastische Scheibe 8 aufsitzt. Die elastische Scheibe besteht vorzugsweise aus einem Kunststoffmaterial, das bei entsprechendem Druck komprimierbar ist. Die Mantelfläche 9 des Kopfteiles 6 ist zum vorderen Ende hin ebenfalls leicht konisch ausgebildet. Die Stirnseite des Kopfteiles ist mit einer dachförmigen Keilspitze 10 versehen, die zur Zerstörung der die Verbundmasse enthaltenden Glasampulle dient.

Zur Verankerung der Ankerstange 1 wird im Baute 11 ein zylindrisches Bohrloch 12 eingebracht. Nach dem Einschieben der das Harz, den Härter und ggf. Füllstoffe enthaltenden Glasampulle wird die Ankerstange 1 mit einem Bohrhammer in das Bohrloch 12 eingetrieben. Dabei wird mit der Keilspitze 10 die Glasampulle zerstört und gleichzeitig mit den durch die Keilspitze gebildeten Flächen die Komponenten der Verbundmasse 13 durch Vermischen aktiviert.

Nach Beendigung des Setzvorganges und dem Aushärten der Verbundmasse wird über den das Bauteil überragenden Gewindeabschnitt der Ankerstange 1 der zu befestigende Gegenstand 3 aufgeschoben und mit der Mutter 4 verspannt. Durch das mit der Mutter 4 aufgebrachte Montagedrehmoment wird auf die Ankerstange 1 eine Zugkraft ausgeübt, die zu einer geringfügigen axialen Verschiebung der Ankerstange 1 führt. Diese Verschiebung wird durch die elastische und/oder plastische Verformbarkeit der aus Kunststoff bestehenden Scheibe 8 ermöglicht.

Die linke Hälfte der Darstellung in Figur 2 zeigt den vorderen Bereich der Ankerstange 1 vor dem Aufbringen und die rechte Hälfte nach dem Aufbringen des Montagedrehmomentes. Durch die dabei auftretende Zugkraft wird die Scheibe 8 komprimiert, so daß die Ankerstange eine geringfügige axiale Verschiebung erfährt. Dadurch wird der konische Abschnitt 5 ebenso wie die konische Mantelfläche des Kopfteiles 6 von der Wandung 14 der Mörtelplombe 13 soweit abgelöst, daß ein kleiner Spalt entsteht. Die Haltekraft der Ankerstange resultiert aus der Einbindung des Kopfteiles 6 in der Verbundmasse. Aufgrund der Trennung der Ankerstange und der Verbundmasse bleibt beim Auftreten eines Risses der Klebeverbund zwischen der Masse und der Bohrlochwandung erhalten. Damit werden die vom Kopfteil 6 der Ankerstange 1 ausgehenden Schubspannungen durch die Klebeverbindung mit der Bohrlochwandung aufgenommen.

Bei dem in Figur 3 dargestellten Ausführungsbeispiel weist die Schulterfläche 7 des Kopfteiles 6 eine leichte Neigung nach außen auf. Dadurch entsteht eine von dem Abschnitt 5 ausgehende Kerbwirkung, die ein Aufreißen der Mörtelplombe 13 beim Entstehen eines Risses begünstigt. Zusätzlich werden durch die an der Scheibe 8 angeordneten achsparallel verlaufenden Stege 15, die mit ihrer Rückseite an dem konischen Abschnitt 5 anliegen, Sollbruchstellen geschaffen, die ebenfalls das Aufbrechen der Mörtelplombe 13 erleichtern.

## Patentansprüche

1. Ankerstange mit einem Gewinde zum Befestigen eines Gegenstandes und einem mittels einer aushärtenden Kunstharzmasse in einem Bohrloch eines Bauteils verankerbaren Verankerungsbereich, der durch ein am Einführende der Ankerstange angeordnetes Kopfteil und einen konischen, sich zum Kopfteil hin verjüngenden Abschnitt gebildet ist, **dadurch gekennzeichnet**, daß der konische Abschnitt (5) sich bis zu einer Schulterfläche (7, 7a) des Kopfteiles (6) erstreckt, daß die Schulterfläche (7, 7a) des Kopfteiles (6) annähernd rechtwinklig zur Achse der Ankerstange (1) verläuft, daß die Mantelfläche (9) des Kopfteiles (6) sich zum Einführende verjüngt, und daß auf der Schulterfläche (7, 7a) des Kopfteiles (6) eine elastische, ringförmige Scheibe (8) angeordnet ist.

2. Ankerstange nach Anspruch 1, **dadurch gekennzeichnet**, daß die Scheibe (8) als offener Kunststoffring ausgebildet und über den konischen Abschnitt (5) aufgeclipst ist.

3. Ankerstange nach Anspruch 1, **dadurch gekennzeichnet**, daß an der Scheibe (8) mehrere am konischen Abschnitt (5) anliegende und achsparallel verlaufende Stege (15) angeformt sind.

4. Ankerstange nach einem der vorhergehenden Ansprüche, **dadurch gekennzeichnet**, daß das Kopfteil (6) an seiner Stirnseite eine Keilspitze (10) aufweist.

## Claims

1. An anchoring rod having a thread for fixing an article and an anchoring region anchorable in a hole drilled in a component by means of a hardening synthetic resin mass, which anchoring region is formed by a head arranged at the insertion end of the anchoring rod and by a conical portion tapering towards the head, characterized in that the conical portion (5) extends as far as a shoulder area (7, 7a) of the head (6), the shoulder area (7, 7a) of the head (6) runs approximately at right angles to the axis of the anchoring rod (1), the outer surface (9) of the head (6) tapers towards the insertion end, and a resilient annular washer (8) is arranged on the shoulder area (7, 7a) of the head (6).

2. An anchoring rod according to claim 1, characterized in that the washer (8) is in the form of an open plastics ring and is clipped on over the conical portion (5).

3. An anchoring rod according to claim 1, characterized in that several ribs (15) running axially parallel and bearing on the conical portion (5) are moulded on the washer (8).

4. An anchoring rod according to one of the preceding claims, characterized in that the head (6) has a wedge-like tip (10) at its end face.

## Revendications

1. Boulon d'ancrage comprenant un filetage pour la fixation d'un objet, et une zone d'ancrage verrouillable à demeure dans un perçage d'une pièce structurelle, au moyen d'une masse de résine synthétique durcissable, cette zone étant formée par une partie frontale située à l'extrémité d'introduction du boulon d'ancrage, et par une région tronconique se rétrécissant en direction de la partie frontale, caractérisé par le fait que la région tronconique (5) s'étend jusqu'à une surface épaulée (7, 7a) de la partie frontale (6) ; par le fait que la surface épaulée (7, 7a) de la partie frontale (6) s'étend approximativement à angle droit par rapport à l'axe du boulon d'ancrage (1) ; par le fait que la surface (9) de l'enveloppe de la partie frontale (6) se rétrécit en direction de l'extrémité d'introduction ; et par le fait qu'un disque annulaire élastique (8) est disposé sur la surface épaulée (7, 7a) de la partie frontale (6).

2. Boulon d'ancrage selon la revendication 1, caractérisé par le fait que le disque (8) est réalisé sous la forme d'une bague ouverte en matière plastique, et est enclipsé sur la région tronconique (5).

3. Boulon d'ancrage selon la revendication 1, caractérisé par le fait que plusieurs membrures (15), appliquées contre la région tronconique (5) et s'étendant parallèlement à l'axe, sont venues de moulage sur le disque (8) et en sont solidaires.

4. Boulon d'ancrage selon l'une des revendications précédentes, caractérisé par le fait que la partie frontale (6) présente une pointe cunéiforme (10) à sa face extrême.
